# EUROPEAN PATENT SPECIFICATION

(11) **EP 1 997 678 B1**
(45) Date of publication and mention of the grant of the patent: **17.02.2010**
(21) Application number: 08445020.4
(22) Date of filing: 23.05.2008
(51) Int. Cl.: B60P 1/44

(54) **A lift mechanism for a loading platform**
Hebemechanismus für eine Ladeplattform
Mécanisme de levage pour plate-forme de chargement

(30) Priority: 23.05.2007 SE 0701236
(43) Date of publication of application: 03.12.2008
(73) Proprietor: ZEPRO Z-Lyften Produktion AB, 64149 Katrineholm (SE)
(72) Inventor: Ham, Gerard, 61048 Poznan (PL)
(74) Representative: Wihlsson, Joakim Per Magnus

(56) References cited:
- EP-A- 1 741 596
- DE-A1- 19 839 058
- DE-C1- 10 205 669

## Description

### THE BACKGROUND OF THE INVENTION AND PRIOR ART

The present invention relates to a lift mechanism for a loading platform, wherein the lift mechanism comprises a first arm and a second arm arranged in parallel at a distance from each other, wherein each arm has an inner end portion pivotally connected to a support structure and an outer end portion pivotally connected to the loading platform, a torsion element is rotatably connected to the first arm and fixedly connected to the second arm in the vicinity of the outer end portions of the respective arms and a lift cylinder adapted to supply a force to lift the platform, which lift cylinder has an inner end portion pivotally connected to a support structure and an outer end portion pivotally connected to the torsion element via a lever.

Lift mechanisms for loading platforms are used in load vehicles in order to facilitate loading and unloading of goods. Usually, the lift mechanism comprises two parallel arms pivotally connected to the platform in the vicinity of an inner edge portion of the platform. Conventional lift mechanisms comprise two lift cylinders connected to the arms for lifting the platform and two tilt cylinders connected to the platform for tilting the platform. Consequently, the lift mechanism comprises four power cylinders. However, the cost for the cylinders and its associated components consists a relatively large part of the total cost for the lift mechanism.

It is known to use lift mechanisms for loading platforms in vehicles having one lift cylinder connected to one of the arms and one tilt cylinder connected to the platform in the vicinity of the other arm. However, a lift mechanism has elastic properties such that it deflects when it is loaded. Especially, when only one lift cylinder is used, the arms of the lift mechanism will be unequally loaded. In such a case, the end portions of the arms, which support the platform at the inner edge portion of the platform, are deflected to different levels. Consequently, the platform will be inclined when it is unequally loaded. The lifting motion of a loaded and inclined platform continues until the end portion of the uppermost arm reaches a. stop profile defining the level of a load floor of the vehicle. Since the end portion of the other arm is located at a lower level, the inclination of the platform is maintained when the platform is in the upper position. The inclination of the platform at the inner edge portion results in that a part of the inner edge portion of the platform is located at a lower level than the adjacent load floor of the vehicle. It is difficult to push a heavy load over such a gap.

EP 1 741 596 shows a lift mechanism for a platform comprising two parallel pivotal arms and a torsion tube having an extension between outer end portions of the arms. The torsion tube is, at one end, fixedly connected to one of the arms and, at the opposite end, rotatably connected to the other arm. A lift cylinder is connected to the torsion tube via a lever. In cases when the platform is unequally loaded, the outer ends of the arms will be deflected to different levels depending on the elasticity in the lifting mechanism. Consequently, the platform will be inclined during the lifting process also in this case when it is unequally loaded. However, when the outer end of the uppermost arm reaches an upper position defined by a stop profile, it is possible for the lift cylinder to continue to act. Consequently, the lift cylinder has here capacity to provide a turning motion of the torsion tube in the upper position such that also the outer end of the lower arm reaches the stop profile. Thereby, it is possible to eliminate the inclination of the inner edge portion of the platform and thus said gap in the upper position of the platform. However, the inclination of the platform during the lifting motion is not desirable.

### SUMMARY OF THE INVENTION

The object of the present invention is to provide a lift mechanism for a platform which makes it is possible to use only one lift cylinder at the same time as the lift mechanism has capacity to hold the platform in a substantially horizontal position in a loaded state substantially independent of the position of goods on the platform and move the platform to a position in relation to a load floor without any gap.

This object is achieved in that the lift mechanism comprises a stiff element constituting a stiff connection between the first arm and the second arm in the vicinity of the torsion element. The stiff element has only the task to consist a stiff connection between the outer ends of the arms. Thereby, the stiff element can be manufactured of a very stiff material such as a suitable steel material. The stiff element has thereby capacity to hold the outer ends of the arms at substantially the same level even when they are unequally loaded and when the lifting torques in the arms differ. When the lift cylinder is activated, for lifting an unequally loaded platform, it initially turns the torsion element by the lever until the torsion element obtains capacity to transfer a torque to the second arm and a force to the first arm which make it possible to lift the platform. Since the stiff element consists a stiff connection between the outer ends of the arms, the arms are held at substantially the same level during the lifting process. Thereby, the outer ends of the arms reaches, for example, a stop profile defining the level of a load floor of the vehicle at substantially the same time. Consequently, there will occur no or only small gaps between the inner edge portion of the platform and the load floor of the vehicle. However, it is possible to eliminate such possible small gaps by providing an additional activation of the lift cylinder and an increase of the torque in the second arm and an increase of the force in the first arm such that the both arms are lifted exactly to the same level.

According to a preferred embodiment of the invention, the torsion element is tubular. Such a shape of a torsion element is many times favourable. Also the stiff element may be tubular. However, it is possible to give the stiff element a substantially arbitrary shape. The torsion element and the stiff element may be are arranged in parallel. Preferably, the torsion element is arranged inside a tubular stiff element. In such a case, it is possible to arrange the stiff element very close to the torsion element. Furthermore, such an arrangement of the torsion element and the stiff element requires a relatively small space. Alternatively, the stiff element is arranged inside a tubular torsion element

According to a further preferred embodiment of the invention, the torsion element has an extension through a hole in the first arm. Thereby, it is possible to obtain a rotatable connection between the arm and the torsion element in a simple manner. Said hole may comprise a bearing surface. A low friction between the torsion element and the bearing surface is achieved. The bearing surface can comprise a suitable material such as, for example, nylon. The bearing makes it possible to transfer a torque to the second arm and to transfer a radial force to the first arm. Said lever may, at one end, be pivotally connected to the lift cylinder and, at an opposite end, fixedly connected to the torsion element. Such a lever has capacity to transfer a force from the lift cylinder into the torsion element which results in a force in the bearing in the first arm and a torque into the second arm.

According to a further preferred embodiment of the invention, the lift mechanism comprises a tilt cylinder adapted to supply a force to tilt the platform, which tilt cylinder has an inner end portion pivotally connected to a support structure and an outer end portion pivotally connected to the platform. Conventional lift mechanisms for platforms in load vehicles have at least one tilt cylinder for tilting the platform to a vertical position in order to close an opening to a loading space of a vehicle. Preferably, the lift cylinder is arranged in the vicinity of the first arm and the tilt cylinder is arranged in the vicinity of the second arm. Thereby, the arms and the cylinders supply a good underlying support for the platform.

### BRIEF DESCRIPTION OF THE DRAWINGS

The present invention is now to be explained more closely by means of preferred embodiments, which are disclosed as examples, and with reference to the attached drawings.
- Fig 1: shows a lift mechanism according to a first embodiment of the invention,
- Fig 2: shows a lift mechanism according to a second embodiment of the invention and
- Fig 3: shows a lift mechanism according to a third embodiment of the invention.

### DETAILED DESCRIPTION OF PREFERRED EMBODIMENTS OF THE INVENTION

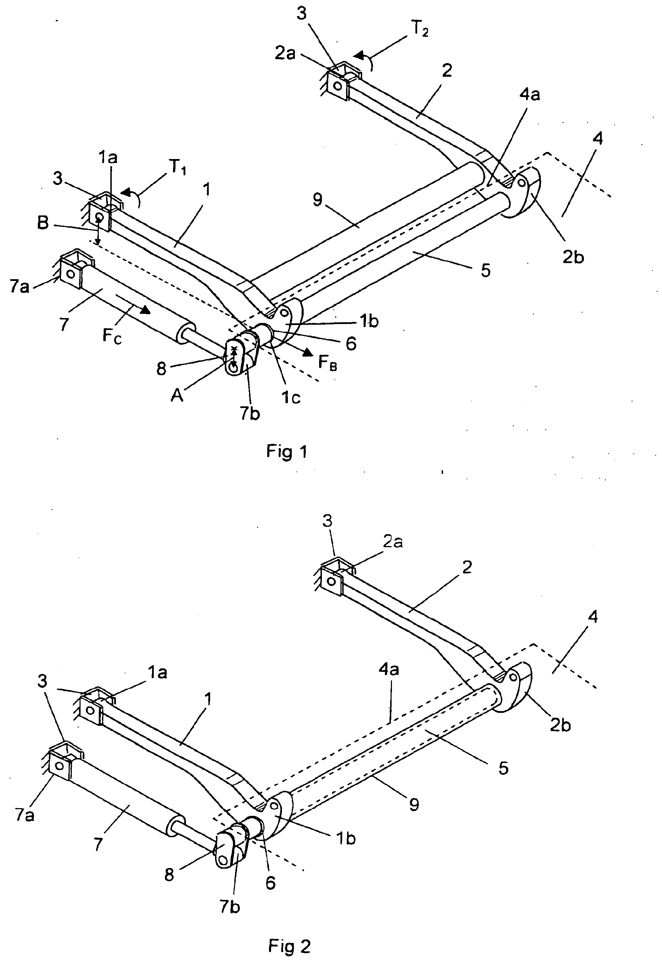

Fig. 1 shows a part of a lift mechanism for a loading platform of a load vehicle. The lift mechanism comprises two parallel arms 1, 2 pivotally arranged at a distance from each other. The first arm 1 has an inner end portion 1 a provided with a pivotally connection to a support structure 3 connected with the vehicle. The first arm 1 has an outer end portion 1b provided with a hole or the like such that it can be pivotally connected to a schematically disclosed loading platform 4 in the vicinity of an inner edge portion 4a of the platform. The second arm 2 has an inner end portion 2a provided with a pivotally connection to another support structure 3 connected with the vehicle. The second arm 2 has an outer end portion 2b provided with a hole or the like such that it can be pivotally connected to the loading platform 4 in the vicinity of the inner edge portion 4a at a distance from the connection of the outer end portion 1 b of the first arm.

A tubular torsion element 5 is, at one end, fixedly connected to the outer end portion 2b of the second arm and, at an opposite end, rotatably connected to an outer end portion 1 b of the first arm. The torsion element 5 has an extension through a through hole 1 c formed in the outer portion 1 b of the first arm. The through hole 1c is provided with a bearing surface 6. A nylon bush can, for example, form the bearing surface 6. A lift cylinder 7 in the form of a hydraulic cylinder has an inner end portion 7a provided with a pivotally connection to a support structure 3 with the vehicle. The lift cylinder 7 has an outer end portion 7b connected to the torsion element 5 via a lever 8. A tubular stiff element 9 provides a stiff connection between the outer end portion of first arm 1 and the outer end portion of second arm 2 in the vicinity of the torsion element 5. The stiff element 9 has, at one end, a stiff connection to the first arm 1 and, at an opposite end, a stiff connection to the second arm 2.The stiff connections between the stiff element 9 and the arms 1, 2 can be performed by welding.

When goods are to be loaded on the vehicle, the lift cylinder 7 is activated in a manner such the platform 4 is lowered to the level of the ground. In this position, it is easy to apply the goods on the platform 4. When the platform is to be lifted, the lift cylinder 7 is activated such that it creates a force F_{C} acting on the tubular torsion element 5 via the lever 8. The force F_{C} of the lift cylinder 7 acts at a perpendicular distance A from a rotational axis of the tubular torsion element 5 such that a torque T₂ is created in the tubular torsion element 5. The magnitude of the torque T₂ is the product of the force F_{c} and the perpendicular distance A. This torque T₂ also acts on the second arm 2 for turning it around its pivotally arranged inner end portion 2a in a lifting direction of the platform 4. The distance A varies somewhat during the lifting motion and thus the torque T₂. The force F_{C} of the lift cylinder 7 also creates a force F_{B} which acts on the bearing 6 in the through hole 1c of the first arm. This force F_{B} acts at a perpendicular distance B from the pivotally arranged inner end portion of the first arm 1 such that a torque T₁ is created which tends to turns the first arm 1 around its inner end portion 1 a in a lifting direction of the platform 4. The magnitude of the torque T₁ is the product of the force F_{B} and the perpendicular distance B. The distance B varies during the lifting motion and thus the torque T₁. The lift cylinder 7 is adapted to supply a force F_{C} creating torques T₁, T₂ in the arms 1, 2 which make it possible to lift the platform 4.

The stiff tubular element 9 consists a rigid connection between the outer end parts of the arms 1, 2. Thereby, the arms will be lifted substantially simultaneously. Furthermore, the stiff tubular element 9 makes that the outer end portions 1 b, 2b of the arms will be on substantially the same level during the whole lifting motion of the platform no matter how the goods are positioned on the platform 4. Since the outer end portions 1 b, 2b of the arms are on substantially the same level, the whole inner edge portion 4a of the platform is also substantially on the same level in a loaded state and during the following lifting motion. When the lift mechanism has lifted the platform 4 to an upper position, the outer end portions 1b, 2b of the respective arms come substantially simultaneously in contact with a stop profile defining the level of a load floor of the vehicle. Thereby, there will be no gap or a very small initial gap between a possible lower part of the platform 4 and the load floor of the vehicle. However, by means of a further activation of the lift cylinder 7, it is possible to provide an additional torque T₂ in the torsion element 5 and an additional force F_{B} in the bearing 6 in order to lift such a possible lower part of the platform to the level of the load floor of the vehicle. Consequently, there will be no gap between the platform 4 and the load floor of the vehicle when the lift mechanism has lifted the platform to an upper position.

Fig. 2 shows an alternative embodiment of the invention. In this case, the stiff element is a tubular element 9 with an empty inner space. The tubular torsion element 5 is here arranged inside the inner space of the stiff tubular element 9. Thereby, the stiff element 9 will be arranged very close to the torsion element 5. Such an arrangement of the stiff element 9 and the torsion element 5 requires a relatively small space. The function of this embodiment corresponds to the function of the embodiment in Fig. 1.

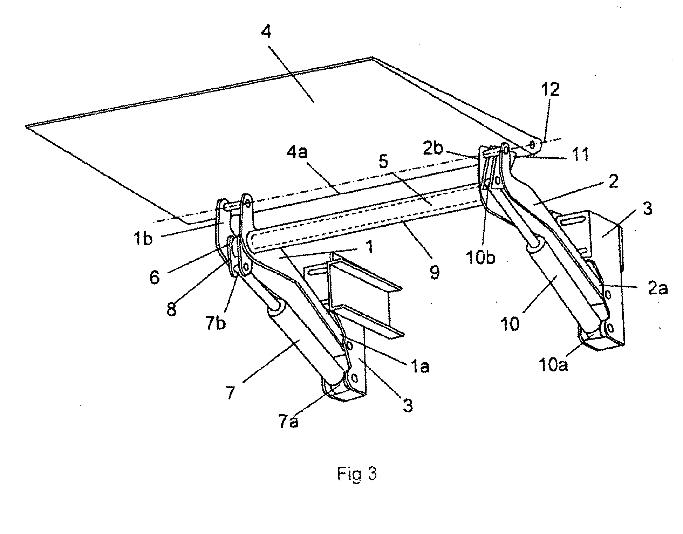

Fig. 3 shows a further alternative embodiment of the invention. In this case, a tilt cylinder 10 of the lifting mechanism is shown. The tilt cylinder 10 can be a hydraulic cylinder. The tilt cylinder 10 has an inner end portion 10a provided with a pivotally connection to a support structure 3 connected with the vehicle. The tilt cylinder 10 has an outer end portion 10b pivotally connected to a support member 11, which is fixedly connected to the platform 4. The support member 11 is connected to the platform at a distance from a pivot axis 12 of the platform 4, which is defined by the pivotally connections between the outer end portions 1 b, 2b of arms and the platform 4. The tilt cylinder 10 is arranged in the vicinity of the second arm 2 and a lift cylinder 7 is arranged in the vicinity of the first arm 1. Each of the arms 1, 2 comprise two plate elements arranged at a distance from each other. Thereby, it is possible to arrange the lift cylinder substantially vertically below the first arm 1 and the tilt cylinder 10 substantially vertically below the second arm 2.

When the platform 4 has been lifted to an upper position by the lift cylinder 7 and the goods has been moved into a loading space of the vehicle, the tilt cylinder 10 is activated. The tilt cylinder 10 supplies a force to the platform 4, via the support member 11, such that the platform 4 turns around the axis 12 to a substantially vertical position. In this vertical position, the platform 4 closes an opening to the loading space of the vehicle. When the vehicle has to be loaded or unloaded, the tilt cylinder is first activated for turning the platform to a substantially horizontal position before it is lowered to the ground by the lift cylinder.

The invention is not restricted to the described embodiments disclosed in the figures, but may be varied freely within the scope of the claims. The lift cylinder and the tilt cylinder do not need to be hydraulic cylinder. They can alternatively be pneumatic cylinders or electric cylinders.

## Claims

1. A lift mechanism for a loading platform (4), wherein the lift mechanism comprises a first arm (1) and a second arm (2) arranged in parallel at a distance from each other, wherein each arm (1, 2) has an inner end portion (1a, 2a) pivotally connected to a support structure (3) and an outer end portion (1b, 2b) pivotally connected to the loading platform (4), a torsion element (5) rotatably connected to the first arm (1) and fixedly connected to the second arm (2) in the vicinity of the outer end portions (1b, 2b) of the respective arms and a lift cylinder (7) adapted to supply a force to lift the platform (4), which lift cylinder has an inner end portion (7a) pivotally connected to a support structure (3) and an outer end portion pivotally connected to the torsion element (5) via a lever (8), **characterised in that** the lift mechanism comprises a stiff element (9) constituting a stiff connection between the first arm (1) and the second arm (2) in the vicinity of the torsion element (5).

2. A lift mechanism according to claim 1, **characterised in that** the torsion element (5) is tubular.

3. A lift mechanism according to claim 2, **characterised in that** the stiff element (9) is tubular.

4. A lift mechanism according to any one of the preceding claims, **characterised in that** the torsion element (5) and the stiff element (9) are arranged in parallel.

5. A lift mechanism according to any one of the preceding claims, **characterised in that** the torsion element (5) is arranged inside the stiff element (9).

6. A lift mechanism according to any one of the preceding claims 1 to 5, **characterised in that** the stiff element (9) is arranged inside the torsion element (5).

7. A lift mechanism according to any one of the preceding claims, **characterised in that** the torsion element (5) has an extension through a hole (1c) in the first arm.

8. A lift mechanism according to claim 7, **characterised in that** said hole (1c) comprises a bearing surface (6).

9. A lift mechanism according to any one of the claims 3 to 8, **characterised in that** said lever (8) is, at one end, pivotally connected to the lift cylinder (7) and, at an opposite end, fixedly connected to the torsion element (5).

10. A lift mechanism according to any one of the preceding claims, **characterised in that** it comprises a tilt cylinder (10) adapted to supply a force to tilt the platform (4), which tilt cylinder has an inner end portion (10a) pivotally connected to a support structure (3) and an outer end portion (10b) pivotally connected to the platform.

11. A lift mechanism according to claim 10, **characterised in that** the lift cylinder (7) is arranged in the vicinity of the first arm (1) and the tilt cylinder (10) is arranged in the vicinity of the second arm (2).

## Patentansprüche

1. Hubmechanismus für eine Ladeplattform (4), wobei der Hubmechanismus umfasst:
einen ersten Arm (1) und einen zweiten Arm (2), welche in einem Abstand parallel zueinander angeordnet sind, wobei jeder Arm (1, 2) einen mit einem Tragaufbau (3) schwenkbar verbundenen inneren Endabschnitt (1a, 2a) und einen mit der Ladeplattform (4) schwenkbar verbundenen äußeren Endabschnitt (1b, 2b) aufweist;
ein Torsionselement (5), welches in der Nachbarschaft der äußeren Endabschnitte (1b, 2b) der jeweiligen Arme mit dem ersten Arm (1) drehbar und mit dem zweiten Arm (2) unbeweglich verbunden ist; und
einen Hubzylinder (7), welcher dazu angepasst ist, die Plattform (4) mit einer Kraft zu beaufschlagen, wobei der Hubzylinder einen mit einem Tragaufbau (3) schwenkbar verbundenen inneren Endabschnitt (7a) und einen mit dem Torsionselement (5) über einen Hebel (8) schwenkbar verbundenen äußeren Endabschnitt aufweist,
**dadurch gekennzeichnet, dass** der Hubmechanismus ein starres Element (9) aufweist, welches eine starre Verbindung zwischen dem ersten Arm (1) und dem zweiten Arm (2) in der Nähe des Torsionselementes (5) bildet.

2. Hubmechanismus nach Anspruch 1, **dadurch gekennzeichnet, dass** das Torsionselement (5) röhrenförmig ausgebildet ist.

3. Hubmechanismus nach Anspruch 2, **dadurch gekennzeichnet, dass** das starre Element (9) röhrenförmig ausgebildet ist.

4. Hubmechanismus nach einem der vorhergehenden Ansprüche, **dadurch gekennzeichnet, dass** das Torsionselement (5) und das starre Element (9) parallel angeordnet sind.

5. Hubmechanismus nach einem der vorhergehenden Ansprüche, **dadurch gekennzeichnet, dass** das Torsionselement (5) innerhalb des starren Elementes (9) angeordnet ist.

6. Hubmechanismus nach einem der vorhergehenden Ansprüche 1 bis 5, **dadurch gekennzeichnet, dass** das starre Element (9) innerhalb des Torsionselementes (5) angeordnet ist.

7. Hubmechanismus nach einem der vorhergehenden Ansprüche, **dadurch gekennzeichnet, dass** das Torsionselement (5) eine Verlängerung aufweist, welche durch ein Loch (1c) in dem ersten Arm verläuft.

8. Hubmechanismus nach Anspruch 7, **dadurch gekennzeichnet, dass** das Loch (1c) eine Lagerfläche (6) aufweist.

9. Hubmechanismus nach einem der vorhergehenden Ansprüche 3 bis 8, **dadurch gekennzeichnet, dass** der Hebel (8) an einem Ende mit dem Hubzylinder (7) schwenkbar und an einem gegenüberliegenden Ende mit dem Torsionselement (5) unbeweglich verbunden ist.

10. Hubmechanismus nach einem der vorhergehenden Ansprüche, **dadurch gekennzeichnet, dass** er einen Neigezylinder (10) aufweist, welcher dazu angepasst ist, eine Kraft zur Neigung der Plattform (4) bereitzustellen, wobei der Neigezylinder einen mit einem Tragaufbau (3) schwenkbar verbundenen inneren Endabschnitt (10a) und einen mit der Plattform schwenkbar verbundenen äußeren Endabschnitt (10b) aufweist.

11. Hubmechanismus nach Anspruch 10, **dadurch gekennzeichnet, dass** der Hubzylinder (7) in der Nachbarschaft des ersten Arms (1) angeordnet ist, und dass der Neigezylinder (10) in der Nachbarschaft des zweiten Arms (2) angeordnet ist.

## Revendications

1. Mécanisme de levage pour une plate-forme de chargement (4), dans lequel le mécanisme de levage comprend un premier bras (1) et un second bras (2) agencés en parallèle à une distance l'un de l'autre, dans lequel chaque bras (1,2) comporte une partie d'extrémité intérieure (la, 2a) reliée de façon pivotante à une structure de support (3) et une partie d'extrémité extérieure (1b, 2b) reliée de façon pivotante à la plate-forme de chargement (4), un élément de torsion (5) relié de façon rotative au premier bras (1) et relié de façon fixe au second bras (2) dans le voisinage des parties d'extrémité extérieures (1b, 2b) des bras respectifs et un vérin de levage (7) adapté pour fournir une force pour lever la plate-forme (4), lequel vérin de levage comporte une partie d'extrémité intérieure (7a) reliée de façon pivotante à une structure de support (3) et une partie d'extrémité extérieure reliée de façon pivotante à l'élément de torsion (5) par l'intermédiaire d'un levier (8), **caractérisé en ce que** le mécanisme de levage comprend un élément rigide (9) constituant une liaison rigide entre le premier bras (1) et le second bras (2) dans le voisinage de l'élément de torsion (5).

2. Mécanisme de levage selon la revendication 1, **caractérisé en ce que** l'élément de torsion (5) est tubulaire.

3. Mécanisme de levage selon la revendication 2, **caractérisé en ce que** l'élément rigide (9) est tubulaire.

4. Mécanisme de levage selon une quelconque des revendications précédentes, **caractérisé en ce que** l'élément de torsion (5) et l'élément rigide (9) sont agencés en parallèle.

5. Mécanisme de levage selon une quelconque des revendications précédentes, **caractérisé en ce que** l'élément de torsion (5) est agencé à l'intérieur de l'élément rigide (9).

6. Mécanisme de levage selon une quelconque des revendications précédentes 1 à 5, **caractérisé en ce que** l'élément rigide (9) est agencé à l'intérieur de l'élément de torsion (5).

7. Mécanisme de levage selon une quelconque des revendications précédentes, **caractérisé en ce que** l'élément de torsion (5) comporte un prolongement à travers un orifice (1c) dans le premier bras.

8. Mécanisme de levage selon la revendication 7, **caractérisé en ce que** ledit orifice (1 c) comprend une surface de palier (6).

9. Mécanisme de levage selon une quelconque des revendications 3 à 8, **caractérisé en ce que** ledit levier (8) est, à une extrémité, relié de façon pivotante au vérin de levage (7) et, à une extrémité opposée, relié de façon fixe à l'élément de torsion (5).

10. Mécanisme de levage selon une quelconque des revendications précédentes, **caractérisé en ce qu'**il comprend un vérin d'inclinaison (10) adapté pour fournir une force pour incliner la plate-forme (4), lequel vérin d'inclinaison comporte une partie d'extrémité intérieure (10a) reliée de façon pivotante à une structure de support (3) et une partie d'extrémité extérieure (10b) reliée de façon pivotante à la plate-forme.

11. Mécanisme de levage selon la revendication 10, **caractérisé en ce que** le vérin de levage (7) est agencé dans le voisinage du premier bras (1) et le vérin d'inclinaison (10) est agencé dans le voisinage du second bras (2).
